(19) Europäisches Patentamt
European Patent Office
Office européen des brevets

(11) EP 1 912 503 B1

(12) **EUROPÄISCHE PATENTSCHRIFT**

(45) Veröffentlichungstag und Bekanntmachung des Hinweises auf die Patenterteilung:
**30.07.2014 Patentblatt 2014/31**

(21) Anmeldenummer: **06778106.2**

(22) Anmeldetag: **01.08.2006**

(51) Int Cl.:
***A01N 43/56*** (2006.01) ***A01N 43/90*** (2006.01)
***A01N 43/653*** (2006.01) ***A01N 3/00*** (2006.01)
***A01N 47/38*** (2006.01) ***A01N 37/38*** (2006.01)
***A01N 47/24*** (2006.01) ***A01N 37/34*** (2006.01)
***A01N 47/14*** (2006.01) ***A01N 35/04*** (2006.01)

(86) Internationale Anmeldenummer:
**PCT/EP2006/064907**

(87) Internationale Veröffentlichungsnummer:
**WO 2007/017416 (15.02.2007 Gazette 2007/07)**

(54) **FUNGIZIDE MISCHUNGEN ENTHALTEND SUBSTITUIERTE 1-METHYL-PYRAZOL-4-YLCARBONSÄUREANILIDE**

FUNGICIDAL MIXTURES CONTAINING 1-METHYLPYRAZOL-4-YL CARBOXYLIC ACID ANILIDES

MÉLANGES FONGICIDES CONTENANT DES ANILIDES D’ACIDE 1-MÉTHYLPYRAZOL-4-YL CARBOXYLIQUE

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL HR MK RS**

(30) Priorität: **05.08.2005 DE 102005037677**
**02.02.2006 EP 06101198**

(43) Veröffentlichungstag der Anmeldung:
**23.04.2008 Patentblatt 2008/17**

(73) Patentinhaber: **BASF SE**
**67056 Ludwigshafen (DE)**

(72) Erfinder:
- **DIETZ, Jochen**
  **68167 Mannheim (DE)**
- **GEWEHR, Markus**
  **56288 Kastellaun (DE)**
- **STRATHMANN, Siegfried**
  **67117 Limburgerhof (DE)**
- **STIERL, Reinhard**
  **67251 Freinsheim (DE)**
- **WERNER, Frank**
  **67434 Neustadt (DE)**
- **SCHERER, Maria**
  **76829 Landau (DE)**

(56) Entgegenhaltungen:
**WO-A-2005/034628 WO-A-2006/069715**
**WO-A-2006/069716 WO-A-2006/087343**
**WO-A-2007/000462 WO-A-2007/003540**
**WO-A-2007/003564 WO-A-2007/003603**
**WO-A-2007/003643 WO-A-2007/003644**
**WO-A-2007/006806 WO-A-2007/012598**
**WO-A2-00/14071 WO-A2-2005/110089**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 912 503 B1

## Beschreibung

Die vorliegende Erfindung betrifft fungizide Mischungen, enthaltend als aktive Komponenten

1) ein 1-Methylpyrazol-4-ylcarbonsäureanilid der Formel Ia.719, Ia.344, Id.344 oder Ij.344

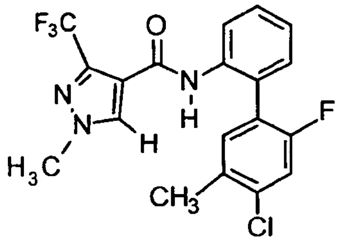

Ia.719

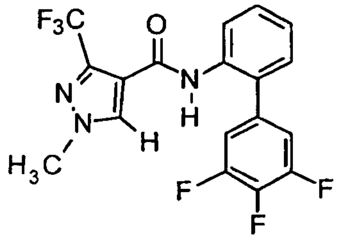

Ia.344

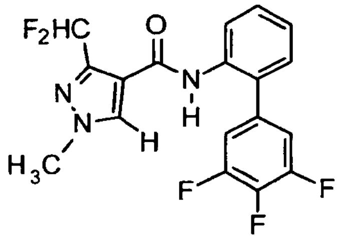

Id.344

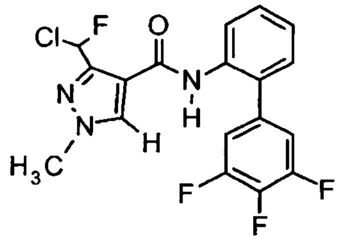

Ij.344

und

2) einen Wirkstoff II ausgewählt aus A) bis F):

A) Azole, ausgewählt aus Epoxiconazol, Triticonazol und Pro-chloraz;

B) das Strobilurin Pyraclostrobin;

C) das Carbonsäureamid Dimethomorph;

D) die heterocyclische Verbindung 5-Chlor-7-(4-methyl-piperidin-1-yl)-6-(2,4,6-trifluor-phenyl)-[1,2,4]triazolo[1,5-a]pyrimidin;

E) das Carbamat Metiram;

F) Sonstige Fungizide, ausgewählt aus Chlorthalonil und Metrafenon;

in einer synergistisch wirksamen Menge.

Außerdem betrifft die Erfindung ein Verfahren zur Bekämpfung von Schadpilzen mit einer Mischung aus Komponente 1) und mindestens einem der Wirkstoffe II, die Ver-wendung der Komponente 1) mit Wirkstoff(en) II zur Herstellung derartiger Mischungen sowie Mittel und Saatgut enthaltend diese Mischungen.

Die als Komponente 1) voranstehend bezeichneten 1-Methylpyrazol-4-ylcarbonsäure-anilide, deren Herstellung und deren Wirkung gegen Schadpilze sind aus der Literatur bekannt (vgl. z.B. EP-A 545 099, EP-A 589 301 und WO 99/09013) oder auf die dort beschriebene Weise herstellbar.

Die bekannten 1-Methyl-pyrazol-4-ylcarbonsäureanilide können jedoch, insbesondere bei niedrigen Aufwandmengen, nur bedingt befriedigen.

Die voranstehend als Komponente 2) genannten Wirkstoffe II, ihre Herstellung und ihre Wirkung gegen Schadpilze sind allgemein bekannt (vgl. z.B. http://www.hclrss.demon.co.uk/index.html); sie sind kommerziell erhältlich.

Epoxiconazol, (2*RS*,3*SR*)-1-[3-(2-Chlorphenyl)-2,3-epoxy-2-(4-fluorophenyl)propyl]-1*H*-1,2,4-triazol (EP-A 196 038);

Prochloraz, Imidazol-1-carbonsäure-propyl-[2-(2,4,6-trichlorphenoxy)-ethyl]-amid (US 3,991,071);

Triticonazol, (5*E*)-5-[(4-Chlorphenyl)methylen]-2,2-dimethyl-1-(1*H*-1,2,4-triazol-1-ylmethyl)cyclopentanol (FR 26 41 277);

Metiram, Zinkammoniat-ethylenbis(dithiocarbamat) (US 3,248,400);

5-Chlor-7-(4-methyl-piperidin-1-yl)-6-(2,4,6-trifluor-phenyl)-[1,2,4]triazolo[1,5-a]pyrimidin (WO 98/46607);

Chlorthalonil, 2,4,5,6-Tetrachlorisophthalonitril (US 3,290,353);

Metrafenon, 3' -Brom-2,3,4,6' -tetramethoxy-2' ,6-dimethylbenzophenon (US 5,945,567);

Dimethomorph, 3-(4-Chlorphenyl)-3-(3,4-dimethoxyphenyl)-1-morpholin-4-yl-propenon (EP-A 120 321);

Pyraclostrobin, N-{2-[1-(4-Chlorphenyl)-1H-pyrazol-3-yloxymethyl]phenyl}(N-methoxy)carbaminsäuremethylester (WO 96/01256);

WO 2005/034628 beschreibt synergistische Mischungen von Fungiziden mit Pyrazolcarbonsäureaniliden.

WO 2006/087343 beschreibt fungizide Pyrazolcarbonsäureanilide und schlägt Mischungen mit weiteren Aktivstoffen vor.

Im Hinblick auf eine Senkung der Aufwandmengen und eine Verbreiterung des Wirkungsspektrums der Wirkstoffe I und II lagen der vorliegenden Erfindung Mischungen als Aufgabe zugrunde, die bei verringerter Gesamtmenge an ausgebrachten Wirkstoffen eine verbesserte Wirkung gegen Schadpilze, insbesondere für bestimmte Indikationen, zeigen.

Demgemäss wurden die eingangs definierten Mischungen der Wirkstoffe I und II gefunden. Es wurde außerdem gefunden, dass sich bei gleichzeitiger, und zwar gemeinsamer oder getrennter Anwendung mindestens einer Verbindung I und von mindestens einem der Wirkstoffe II, oder der Verbindung(en) I und mindestens einem der Wirkstoffe II nacheinander, Schadpilze besser bekämpfen lassen als mit den Einzelverbindungen allein (synergistische Mischungen).

Durch gleichzeitige gemeinsame oder getrennte Anwendung von Komponente 1) mit mindestens einem Wirkstoff II wird die fungizide Wirksamkeit in überadditivem Maße erhöht.

Die Verbindungen Ia.719, Ia.344, Id.344 und Ij.344 können in verschiedenen Kristallmodifikationen vorliegen, die sich in der biologischen Wirksamkeit unterscheiden können.

1-Methyl-pyrazol-4-ylcarbonsäureanilide sind Ia.344 und Ia.719,

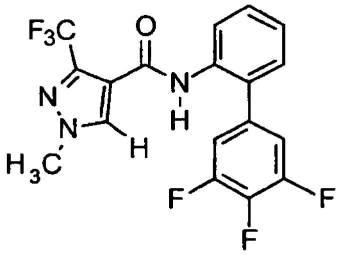

Ia.344

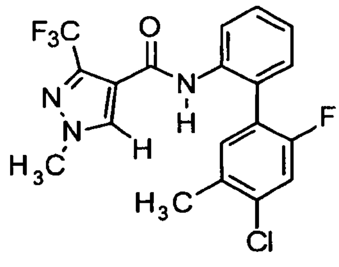

Ia.719

in der folgenden Tabelle 2 aufgelistet:

Tabelle 2:

| Verbindung Nr. | Fp. [°C] |
|---|---|
| Ia.344 | 120-124 |
| Ia.719 | 106-108 |

und die Verbindung Id.344:

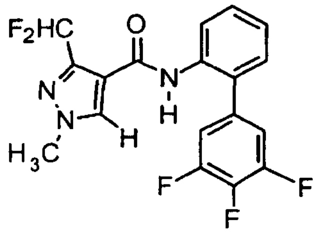

Id.344

| Verbindung | Fp. [°C] |
|---|---|
| Nr. Id.344 | 156-158 |

sowie die Verbindung Ij.344:

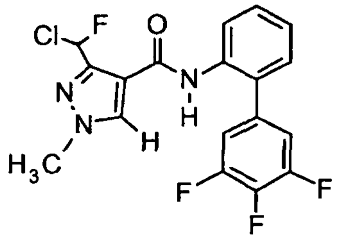

Ij.344

| Verbindung | Fp. [°C] |
|---|---|
| Nr. Ij.344 | 154-157, also |

3-Trifluormethyl-1-methyl-1H-pyrazol-4-carbonsäure-N-(2'-fluor-4'-chlor-5'-methyl-biphenyl-2-yl)-amid, 3-Trifluormethyl-1-methyl-1H-pyrazol-4-carbonsäure-N-(3',4',5'-trifluorbiphenyl-2-yl)-amid, 3-Difluormethyl-1-methyl-1H-pyrazol-4-carbonsäure-N-(3',4',5'-trifluorbiphenyl-2-yl)-amid und 3-Chlorfluormethyl-1-methyl-1H-pyrazol-4-carbonsäure-N-(3',4',5'-trifluorbiphenyl-2-yl)-amid.

Die Mischungen enthalten Komponente 1) mit einem Wirkstoff ausgewählt aus der Gruppe der A) Azole, ausgewählt aus Epoxiconazol, Triticonazol und Prochloraz, der Gruppe B) Pyraclostrobin, der Gruppe C) Dimethomorph, der Gruppe D) 5-Chlor-7-(4-methyl-piperidin-1-yl)-6-(2,4,6-trifluor-phenyl)-[1,2,4]triazolo[1,5-a]pyrimidin, der Gruppe E) Metiram und der Gruppe F) Sonstige Fungizide, ausgewählt aus Chlorthalonil und Metrafenon.

Bevorzugte Wirkstoffkombinationen sind in den folgenden Tabellen 3 bis 9 aufgeführt:

Tabelle 3

| Wirkstoffkombinationen mit Wirkstoffen II der Gruppe A): | |
|---|---|
| Komponente 1) | Wirkstoff II |
| Ij.344 | Epoxiconazol |
| Id.344 | Epoxiconazol |
| Ia.344 | Epoxiconazol |
| ij.344 | Triticonazol |
| Id.344 | Triticonazol |
| Ia.344 | Triticonazol |
| Ij.344 | Prochloraz |
| Id.344 | Prochloraz |

(fortgesetzt)

| Wirkstoffkombinationen mit Wirkstoffen II der Gruppe A): | |
|---|---|
| Komponente 1) | Wirkstoff II |
| Ia.344 | Prochloraz |

Tabelle 4

| Wirkstoffkombinationen mit Wirkstoff II der Gruppe B): | |
|---|---|
| Komponente 1) | Wirkstoff II |
| Ij.344 | Pyraclostrobin |
| Id.344 | Pyraclostrobin |
| Ia.344 | Pyraclostrobin |

Tabelle 5

| Wirkstoffkombinationen mit Wirkstoff II der Gruppe C): | |
|---|---|
| Komponente 1) | Wirkstoff II |
| Ij.344 | Dimethomorph |
| Id.344 | Dimethomorph |
| Ia.344 | Dimethomorph |

Tabelle 6

| Wirkstoffkombinationen mit Wirkstoff II der Gruppe D): | |
|---|---|
| Komponente 1) | Wirkstoff II |
| Ij.344 | 5-Chlor-7-(4-methyl-piperidin-1-yl)-6-(2,4,6-trifluor-phenyl)-[1,2,4]triazolo[1,5-a]pyrimidin |
| Id.344 | 5-Chlor-7-(4-methyl-piperidin-1-yl)-6-(2,4,6-trifluor-phenyl)-[1,2,4]triazolo[1,5-a]pyrimidin |
| Ia.344 | 5-Chlor-7-(4-methyl-piperidin-1-yl)-6-(2,4,6-trifluor-phenyl)-[1,2,4]triazolo[1,5-a]pyrimidin |

Tabelle 7

| Wirkstoffkombinationen mit Wirkstoff II der Gruppe E): | |
|---|---|
| Komponente 1) | Wirkstoff II |
| Ij.344 | Metiram |
| Id.344 | Metiram |
| Ia.344 | Metiram |

Tabelle 8

| Wirkstoffkombinationen mit Wirkstoffen II der Gruppe F): | | |
|---|---|---|
| Mischung | Komponente 1) | Wirkstoff II |
| Nr. F.5 | Ij.344 | Chlorthalonil |
| Nr. F.6 | Id.344 | Chlorthalonil |

(fortgesetzt)

| Wirkstoffkombinationen mit Wirkstoffen II der Gruppe F): | | |
|---|---|---|
| Mischung | Komponente 1) | Wirkstoff II |
| Nr. F.10 | Ia.344 | Chlorthalonil |
| Nr. F.29 | Ij.344 | Metrafenon |
| Nr. F.30 | Id.344 | Metrafenon |
| Nr. F.34 | Ia.344 | Metrafenon |

Tabelle 9

| Wirkstoffkombinationen mit zwei Wirkstoffen II: | | |
|---|---|---|
| Komponente 1) | Wirkstoff II | Wirkstoff II |
| 1-Methyl-3-trifluormethyl-1H-pyr-azol-4-carbonsäure-N-(2'-fluor-4'-chlor-5'-methylbiphenyl-2-yl)-amid | Pyraclostrobin | Epoxiconazol |
| 1-Methyl-3-trifluormethyl-1H-pyr-azol-4-carbonsäure-N-(3',4',5'-trifluorbiphenyl-2-yl)-amid | Pyraclostrobin | Epoxiconazol |
| 1-Methyl-3-difluormethyl-1H-pyr-azol-4-carbonsäure-N-(3',4',5'-trifluorbiphenyl-2-yl)-amid | Pyraclostrobin | Epoxiconazol |
| 3-Chlorfluormethyl-1-methyl-1H-pyrazol-4-carbonsäure-N-(3',4',5'-trifluorbiphenyl-2-yl)-amid | Pyraclostrobin | Epoxiconazol |
| 1-Methyl-3-trifluormethyl-1H-pyr-azol-4-carbonsäure-N-(2'-fluor-4'-chlor-5'-methylbiphenyl-2-yl)-amid | Pyraclostrobin | Triticonazol |
| 1-Methyl-3-trifluormethyl-1H-pyrazol-4-carbonsäure-N-(3',4',5'-trifluorbiphenyl-2-yl)-amid | Pyraclostrobin | Triticonazol |
| 1-Methyl-3-difluormethyl-1H-pyrazol-4-carbonsäure-N-(3',4',5'-trifluorbiphenyl-2-yl)-amid | Pyraclostrobin | Triticonazol |
| 3-Chlorfluormethyl-1-methyl-1H-pyrazol-4-carbonsäure-N-(3',4',5'-trifluorbiphenyl-2-yl)-amid | Pyraclostrobin | Triticonazol |
| 1-Methyl-3-trifluormethyl-1H-pyr-azol-4-carbonsäure-N-(2'-fluor-4'-chlor-5'-methylbiphenyl-2-yl)-amid | Pyraclostrobin | Metrafenon |
| 1-Methyl-3-trifluormethyl-1H-pyrazol-4-carbonsäure-N-(3',4',5'-trifluorbiphenyl-2-yl)-amid | Pyraclostrobin | Metrafenon |
| 1-Methyl-3-difluormethyl-1H-pyrazol-4-carbonsäure-N-(3',4',5'-trifluorbiphenyl-2-yl)-amid | Pyraclostrobin | Metrafenon |
| 3-Chlorfluormethyl-1-methyl-1H-pyrazol-4-carbonsäure-N-(3',4',5'-trifluorbiphenyl-2-yl)-amid | Pyraclostrobin | Metrafenon |

(fortgesetzt)

| Wirkstoffkombinationen mit zwei Wirkstoffen II: | | |
|---|---|---|
| Komponente 1) | Wirkstoff II | Wirkstoff II |
| 1-Methyl-3-trifluormethyl-1H-pyr-azol-4-carbonsäure-N-(2'-fluor-4'-chlor-5'-methylbiphenyl-2-yl)-amid | Epoxiconazol | 5-Chlor-7-(4-methyl-piperidin-1-yl)-6-(2,4,6-trifluor-phenyl)-[1,2,4]triazolo[1,5-a]pyrimidin |
| 1-Methyl-3-trifluormethyl-1H-pyrazol-4-carbonsäure-N-(3',4',5'-trifluorbiphenyl-2-yl)-amid | Epoxiconazol | 5-Chlor-7-(4-methyl-piperidin-1-yl)-6-(2,4,6-tri-fluor-phenyl)-[1,2,4]triazolo[1,5-a]pyrimidin |
| 1-Methyl-3-difluormethyl-1H-pyrazol-4-carbonsäure-N-(3',4',5'-trifluorbiphenyl-2-yl)-amid | Epoxiconazol | 5-Chlor-7-(4-methyl-piperidin-1-yl)-6-(2,4,6-tri-fluor-phenyl)-[1,2,4]triazolo[1,5-a]pyrimidin |
| 3-Chlorfluormethyl-1-methyl-1H-pyrazol-4-carbonsäure-N-(3',4',5'-trifluorbiphenyl-2-yl)-amid | Epoxiconazol | 5-Chlor-7-(4-methyl-piperidin-1-yl)-6-(2,4,6-tri-fluor-phenyl)-[1,2,4]triazolo[1,5-a]pyrimidin |
| 1-Methyl-3-trifluormethyl-1H-pyr-azol-4-carbonsäure-N-(2'-fluor-4'-chlor-5'-methylbiphenyl-2-yl)-amid | Epoxiconazol | Metrafenon |
| 1-Methyl-3-trifluormethyl-1H-pyrazol-4-carbonsäure-N-(3',4',5'-trifluorbiphenyl-2-yl)-amid | Epoxiconazol | Metrafenon |
| 1-Methyl-3-difluormethyl-1H-pyrazol-4-carbonsäure-N-(3',4',5'-trifluorbiphenyl-2-yl)-amid | Epoxiconazol | Metrafenon |
| 3-Chlorfluormethyl-1-methyl-1H-pyrazol-4-carbonsäure-N-(3',4',5'-trifluorbiphenyl-2-yl)-amid | Epoxiconazol | Metrafenon |
| 1-Methyl-3-trifluormethyl-1H-pyr-azol-4-carbonsäure-N-(2'-fluor-4'-chlor-5'-methylbiphenyl-2-yl)-amid | Triticonazol | 5-Chlor-7-(4-methyl-piperidin-1-yl)-6-(2,4,6-tri-fluor-phenyl)-[1,2,4]triazolo[1,5-a]pyrimidin |
| 1-Methyl-3-trifluormethyl-1H-pyrazol-4-carbonsäure-N-(3',4',5'-trifluorbiphenyl-2-yl)-amid | Triticonazol | 5-Chlor-7-(4-methyl-piperidin-1-yl)-6-(2,4,6-tri-fluor-phenyl)-[1,2,4]triazolo[1,5-a]pyrimidin |
| 1-Methyl-3-difluormethyl-1H-pyrazol-4-carbonsäure-N-(3',4',5'-trifluorbiphenyl-2-yl)-amid | Triticonazol | 5-Chlor-7-(4-methyl-piperidin-1-yl)-6-(2,4, 6-tri-fluor-phenyl)-[1,2,4]triazolo[1,5-a]pyrimidin |
| 3-Chlorfluormethyl-1-methyl-1H-pyrazol-4-carbonsäure-N-(3',4',5'-trifluorbiphenyl-2-yl)-amid | Triticonazol | 5-Chlor-7-(4-methyl-piperidin-1-yl)-6-(2,4,6-tri-fluor-phenyl)-[1,2,4]triazolo[1,5-a]pyrimidin |
| 1-Methyl-3-trifluormethyl-1H-pyr-azol-4-carbonsäure-N-(2'-fluor-4'-chlor-5'-methylbiphenyl-2-yl)-amid | Triticonazol | Metrafenon |

(fortgesetzt)

| Wirkstoffkombinationen mit zwei Wirkstoffen II: | | |
|---|---|---|
| Komponente 1) | Wirkstoff II | Wirkstoff II |
| 1-Methyl-3-trifluormethyl-1H-pyrazol-4-carbonsäure-N-(3',4',5'-trifluorbiphenyl-2-yl)-amid | Triticonazol | Metrafenon |
| 1-Methyl-3-difluormethyl-1H-pyrazol-4-carbonsäure-N-(3',4',5'-trifluorbiphenyl-2-yl)-amid | Triticonazol | Metrafenon |
| 3-Chlorfluormethyl-1-methyl-1H-pyrazol-4-carbonsäure-N-(3',4',5'-trifluorbiphenyl-2-yl)-amid | Triticonazol | Metrafenon |
| 1-Methyl-3-trifluormethyl-1H-pyr-azol-4-carbonsäure-N-(2'-fluor-4'-chlor-5'-methylbiphenyl-2-yl)-amid | 5-Chlor-7-(4-methyl-piperidin-1-yl)-6-(2,4,6-tri-fluor-phenyl)-[1,2,4]triazolo-[1,5-a]pyrimidin | Metrafenon |
| 1-Methyl-3-trifluormethyl-1H-pyrazol-4-carbonsäure-N-(3',4',5'-trifluorbiphenyl-2-yl)-amid | 5-Chlor-7-(4-methyl-piperidin-1-yl)-6-(2,4,6-trifluor-phenyl)-[1,2,4]triazolo-[1,5-a]pyrimidin | Metrafenon |
| 1-Methyl-3-difluormethyl-1H-pyrazol-4-carbonsäure-N-(3',4',5'-trifluorbiphenyl-2-yl)-amid | 5-Chlor-7-(4-methyl-piperidin-1-yl)-6-(2,4,6-trifluor-phenyl)-[1,2,4]triazolo-[1,5-a]pyrimidin | Metrafenon |
| 3-Chlorfluormethyl-1-methyl-1H-pyrazol-4-carbonsäure-N-(3',4',5'-trifluorbiphenyl-2-yl)-amid | 5-Chlor-7-(4-methyl-piperidin-1-yl)-6-(2,4,6-tri-fluor-phenyl)-[1,2,4]triazolo-[1,5-a]pyrimidin | Metrafenon |

Die Mischungen aus Komponente 1) und mindestens einem der Wirkstoffe II, bzw. die gleichzeitige gemeinsame oder getrennte Verwendung mindestens einer Komponente 1) mit mindestens einem der Wirkstoffe II, zeichnen sich aus durch eine hervorragende Wirksamkeit gegen ein breites Spektrum von pflanzenpathogenen Pilzen, insbesondere aus der Klasse der *Ascomyceten, Basidiomyceten, Deuteromyceten* und *Peronosporomyceten* (syn. *Oomyceten).* Sie sind zum Teil systemisch wirksam und können im Pflanzenschutz als Blatt-, Beiz- und Bodenfungizide eingesetzt werden. Sie können auch zur Saatgutbehandlung verwendet werden.

Besondere Bedeutung haben sie für die Bekämpfung einer Vielzahl von Pilzen an verschiedenen Kulturpflanzen wie Weizen, Roggen, Gerste, Hafer, Reis, Mais, Rasen, Bananen, Baumwolle, Soja, Kaffee, Zuckerrohr, Wein, Obst- und Zierpflanzen und Gemüsepflanzen wie Gurken, Bohnen, Tomaten, Kartoffeln und Kürbissen, sowie an den Samen dieser Pflanzen.

Speziell eignen sie sich zur Bekämpfung folgender Pflanzenkrankheiten:

- *Alternaria* Arten an Gemüse, Raps, Zuckerrüben und Obst und Reis, z.B. *A. solani* oder *A. alternata* an Kartoffeln und Tomaten,
- *AphanomycesArten* an Zuckerrüben und Gemüse,
- *Ascochyta* Arten an Getreide and Gemüse,
- *Bipolaris* und *Drechslera Arten* an Mais, Getreide, Reis und Rasen, z.B. *D. maydis* an Mais,
- *Blumeria graminis* (Echter Mehltau) an Getreide,
- *Botrytis cinerea* (Grauschimmel) an Erdbeeren, Gemüse, Blumen und Weinreben,
- *Bremia lactucae* an Salat,
- *Cercospora* Arten an Mais, Sojabohnen, Reis und Zuckerrüben,
- *Cochliobolus* Arten an Mais, Getreide, Reis, z.B. *Cochliobolus sativus* an Getreide, *Cochliobolus miyabeanus* an Reis,
- *Colletotricum* Arten an Sojabohnen und Baumwolle,

- *Drechslera* Arten, *Pyrenophora* Arten an Mais, Getreide, Reis und Rasen, z.B. *D. teres* an Gerste oder *D. tritici-repentis* an Weizen,
- *Esca* an Weinrebe, verursacht durch *Phaeoacremonium chlamydosporium, Ph. Aleophilum* und *Formitipora punctata (syn. Phellinus punctatus),*
- *Exserohilum* Arten an Mais,
- *Erysiphe cichoracearum* und *Sphaerotheca fuliginea* an Gurkengewächsen,
- *Fusarium* und *Verticillium* Arten an verschiedenen Pflanzen, z.B. *F. graminearum* oder *F. culmorum* an Getreide oder *F. oxysporum* an einer Vielzahl von Pflanzen, z.B. Tomaten,
- *Gaeumanomyces graminis* an Getreide,
- *Gibberella* Arten an Getreide und Reis (z.B. *Gibberella fujikuroi* an Reis),
- *Grainstaining complexan* Reis,
- *Helminthosporium* Arten an Mais und Reis,
- *Michrodochium nivale* an Getreide,
- *Mycosphaerella* Arten an Getreide, Bananen und Erdnüssen, z.B. *M. graminicola* an Weizen oder *M. fijiesis* an Bananen,
- *Peronospora*-Arten an Kohl und Zwiebelgewächsen, z.B. *P. brassicae* an Kohl oder *P. destructor* an Zwiebel,
- *Phakopsara pachyrhizi* und *Phakopsara meibomiae* an Sojabohnen,
- *Phomopsis* Arten an Sojabohnen und Sonnenblumen,
- *Phytophthora infestans* an Kartoffeln und Tomaten,
- *Phytophthora* Arten an verschiedenen Pflanzen, z.B. *P. capsici* an Paprika,
- *Plasmopara viticola* an Weinreben,
- *Podosphaera leucotricha* an Apfel,
- *Pseudocercosporella herpotrichoides* an Getreide,
- *Pseudoperonospora* an verschiedenen Pflanzen, z.B. *P. cubensisan* Gurke oder *P. humili* an Hopfen,
- *Puccinia* Arten an verschiedenen Pflanzen, z.B. *P. triticina, P. striformins, P. hordei* oder *P. graminis* an Getreide oder *P. asparagi* an Spargel,
- *Pyricularia oryzae, Corticium sasakii, Sarocladium oryzae, S. attenuatum, Entyloma oryzae* an Reis,
- *Pyricularia grisea* an Rasen und Getreide,
- *Pythium spp.* an Rasen, Reis, Mais, Baumwolle, Raps, Sonnenblumen, Zuckerrüben, Gemüse und anderen Pflanzen, z.B. *P. ultiumum* an verschiedenen Pflanzen, *P. aphanidermatum* an Rasen,
- *Rhizoctonia* Arten an Baumwolle, Reis, Kartoffeln, Rasen, Mais, Raps, Zuckerrüben, Gemüse und an verschiedenen Pflanzen, z.B. *R. solani* an Rüben und verschiedenen Pflanzen,
- *Rhynchosporium secalis* an Gerste, Roggen und Triticale,
- *Sclerotinia* Arten an Raps und Sonnenblumen,
- *Septoria tritici und Stagonospora nodorum* an Weizen,
- *Erysiphe* (syn. *Uncinula) necator* an Weinrebe,
- *Setospaeria* Arten an Mais und Rasen,
- *Sphacelotheca reilinia* an Mais,
- *Thievaliopsis* Arten an Sojabohnen und Baumwolle,
- *Tilletia* Arten an Getreide,
- *Ustilago* Arten an Getreide, Mais und Zuckerrohr, z.B. *U. maydis* an Mais,
- *Venturia* Arten (Schorf) an Äpfeln und Birnen, z.B. *V. inaequalis* an Apfel.

Die erfindungsgemäßen Mischungen eignen sich außerdem zur Bekämpfung von Schadpilzen im Materialschutz (z.B. Holz, Papier, Dispersionen für den Anstrich, Fasern bzw. Gewebe) und im Vorratsschutz. Im Holzschutz finden insbesondere folgende Schadpilze Beachtung: Ascomyceten wie *Ophiostoma* spp., *Ceratocystis* spp., *Aureobasidium pullulans, Sclerophoma* spp., *Chaetomium* spp., *Humicola* spp., *Petriella spp., Trichurus spp.;* Basidiomyceten wie *Coniophora spp., Coriolus spp., Gloeophyllum* spp., *Lentinus* spp., *Pleurotus* spp., *Poria* spp., *Serpula* spp. und *Tyromyces spp.,* Deuteromyceten wie *Aspergillus spp., Cladosporium spp., Penicillium* spp., *Trichoderma spp., Alternaria spp., Paecilomyces spp.* und Zygomyceten wie *Muc*or spp., darüber hinaus im Materialschutz folgende Hefepilze: *Candida* spp. und *Saccharomyces cerevisae.*

Komponente 1) mit mindestens einem der Wirkstoffe II können gleichzeitig, und zwar gemeinsam oder getrennt, oder nacheinander aufgebracht werden, wobei die Reihenfolge bei getrennter Applikation im allgemeinen keine Auswirkung auf den Bekämpfungserfolg hat.

Bevorzugt setzt man bei der Bereitstellung der Mischungen die reinen Wirkstoffe ein, denen man weitere Wirkstoffe gegen Schadpilze oder gegen andere Schädlinge wie Insekten, Spinntiere oder Nematoden oder auch herbizide oder wachstumsregulierende Wirkstoffe oder Düngemittel beimischen kann.

Derartige Mischungen aus drei Wirkstoffen bestehen z.B. aus einer Verbindung der Formel I, insbesondere 1-Methyl-3-trifluormethyl-1H-pyrazol-4-carbonsäure-N-(2'-fluor-4'-chlor-5'-methylbiphenyl-2-yl)-amid, 1-Methyl-3-trifluormethyl-1H-pyrazol-4-carbonsäure-N-(3',4',5'-trifluorbiphenyl-2-yl)-amid, 1-Methyl-3-difluormethyl-1 H-pyrazol-4-carbonsäure-N-(3',4',5'-trifluorbiphenyl-2-yl)-amid oder 3-Chlorfluormethyl-1-methyl-1H-pyrazol-4-carbonsäure-N-(3',4',5'-trifluorbiphenyl-2-yl)-amid, einem Azol aus der Gruppe A) Epoxiconazol oderTriticonazol, und einem Insektizid, wobei insbesondere Fipronil und Neonicotinoide wie Acetamiprid, Clothianidin, Dinotefuran, Imidacloprid, Nitenpyram, Thiacloprid und Thiamethoxam in Betracht kommen.

Üblicherweise kommen Mischungen aus mindestens einer Komponente 1) und mindestens einem Wirkstoff II zur Anwendung. Jedoch können auch Mischungen aus mindestens einer Komponente 1) mit zwei oder gewünschtenfalls mehreren Aktivkomponenten besondere Vorteile bieten.

Als weitere Aktivkomponenten im voranstehenden Sinne kommen besonders die eingangs genannten Wirkstoffe II und insbesondere die voranstehend genannten bevorzugten Wirkstoffe II in Betracht.

Komponente 1) und Wirkstoff(e) II werden üblicherweise in einem Gewichtsverhältnis von 100:1 bis 1:100, vorzugsweise 20:1 bis 1:20, insbesondere 10:1 bis 1:10, angewandt.

Die weiteren Aktivkomponenten werden gewünschtenfalls im Verhältnis von 20:1 bis 1:20 zu der Komponente 1) gemischt.

Die Aufwandmengen der erfindungsgemäßen Mischungen liegen, vor allem bei landwirtschaftlichen Kulturflächen, je nach Art der Komponenten 1) und 2) sowie des gewünschten Effekts bei 5 g/ha bis 2000 g/ha, vorzugsweise 20 bis 1500 g/ha, insbesondere 50 bis 1000 g/ha.

Die Aufwandmengen für die Komponente 1) I liegen entsprechend in der Regel bei 1 bis 1000 g/ha, vorzugsweise 10 bis 900 g/ha, insbesondere 20 bis 750 g/ha.

Die Aufwandmengen für den Wirkstoff II liegen entsprechend in der Regel bei 1 bis 2000 g/ha, vorzugsweise 10 bis 1500 g/ha, insbesondere 40 bis 1000 g/ha.

Bei der Saatgutbehandlung werden im allgemeinen Aufwandmengen an Mischung von 1 bis 1000 g pro 100 kg Saatgut, vorzugsweise 1 bis 750 g pro 100 kg, insbesondere 5 bis 500 g pro 100 kg Saatgut, verwendet.

Das Verfahren zur Bekämpfung von Schadpilzen erfolgt durch die getrennte oder gemeinsame Applikation von Komponente 1) und mindestens einem der Wirkstoffe II, oder einer Mischung aus Komponente 1) und mindestens einem der Wirkstoffe II, durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden Mischungen, bzw. die Komponente 1) und mindestens einer der Wirkstoffe II, können in die üblichen Formulierungen übergeführt werden, z.B. Lösungen, Emulsionen, Suspensionen, Stäube, Pulver, Pasten und Granulate. Die Anwendungsform richtet sich nach dem jeweiligen Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Verstrecken der Wirkstoffe mit Lösungsmitteln und/oder Trägerstoffen, gewünschtenfalls unter Verwendung von Emulgiermitteln und Dispergiermitteln. Als Lösungsmittel / Hilfsstoffe kommen dafür im wesentlichen in Betracht:

- Wasser, aromatische Lösungsmittel (z.B. Solvesso® Produkte, Xylol), Paraffine (z.B. Erdölfraktionen), Alkohole (z.B. Methanol, Butanol, Pentanol, Benzylalkohol), Ketone (z.B. Cyclohexanon, gamma-Butryolacton), Pyrrolidone (N-Methylpyrrolidon, N-Octylpyrrolidon), Acetate (Glykoldiacetat), Glykole, Dimethylfettsäureamide, Fettsäuren und Fettsäureester. Grundsätzlich können auch Lösungsmittelgemische verwendet werden.
- Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie Lignin-Sulfitablaugen und Methylcellulose.

Als oberflächenaktive Stoffe kommen Alkali-, Erdalkali-, Ammoniumsalze von Ligninsulfonsäure, Naphthalinsulfonsäure, Phenolsulfonsäure, Dibutylnaphthalinsulfonsäure, Alkylarylsulfonate, Alkylsulfate, Alkylsulfonate, Fettalkoholsulfate, Fettsäuren und sulfatierte Fettalkoholglykolether zum Einsatz, ferner Kondensationsprodukte von sulfoniertem Naphthalin und Naphthalinderivaten mit Formaldehyd, Kondensationsprodukte des Naphthalins bzw. der Naphtalinsulfonsäure mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Tristerylphenylpolyglykolether, Alkyl-arylpolyetheralkohole, Alkohol- und Fettalkoholethylenoxid-Kondensate, ethoxyliertes Rizinusöl, Polyoxyethylenalkylether, ethoxyliertes Polyoxypropylen, Laurylalkoholpoly-glykoletheracetal, Sorbitester, Ligninsulfitablaugen und Methylcellulose in Betracht.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Isophoron, stark polare Lösungsmittel, z.B. Dimethylsulfoxid, N-Methylpyrrolidon oder Wasser in Betracht.

Pulver-, Streu- und Stäubmittel können durch Mischen oder gemeinsames Vermahlen der wirksamen Substanzen mit mindestens einem festen Trägerstoff hergestellt werden.

Granulate, z.B. Umhüllungs-, Imprägnierungs- und Homogengranulate, können durch Bindung der Wirkstoffe an mindestens einen festen Trägerstoff hergestellt werden. Feste Trägerstoffe sind z.B. Mineralerden, wie Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel wie Ammoniumsulfat, Ammoniumphosphat, Ammoniumnitrat, Harnstoffe und pflanzliche Produkte, wie Getreidemehl, Baumrinden-, Holz- und Nussschalenmehl, Cellulosepulver und andere feste Trägerstoffe.

Die Formulierungen enthalten im allgemeinen 0,01 bis 95 Gew.-%, vorzugsweise 0,1 bis 90 Gew.-% der Komponente 1) und mindestens einem der Wirkstoffe II bzw. der Mischung aus Komponente 1) mit mindestens einem der Wirkstoffe II. Die Wirkstoffe werden dabei in einer Reinheit von 90% bis 100%, vorzugsweise 95% bis 100%, (nach NMR- oder HPLC-Spektrum) eingesetzt.

Beispiele für Formulierungen sind: 1. Produkte zur Verdünnung in Wasser

A) Wasserlösliche Konzentrate (SL)

10 Gew.-Teile einer erfindungsgemäßen Mischung werden mit 90 Gew.-Teilen Wasser oder einem wasserlöslichen Lösungsmittel gelöst. Alternativ werden Netzmittel oder andere Hilfsmittel zugefügt. Bei der Verdünnung in Wasser lösen sich die Wirkstoffe. Man erhält auf diese Weise eine Formulierung mit einem Wirkstoffgehalt von insgesamt 10 Gew.-%.

B) Dispergierbare Konzentrate (DC)

20 Gew.-Teile einer erfindungsgemäßen Mischung werden in 70 Gew.-Teilen Cyclohexanon unter Zusatz von 10 Gew.-Teilen eines Dispergiermittels, z.B. Polyvinylpyrrolidon, gelöst. Bei Verdünnung in Wasser ergibt sich eine Dispersion. Der Wirkstoffgehalt beträgt 20 Gew.-%.

C) Emulgierbare Konzentrate (EC)

15 Gew.-Teile einer erfindungsgemäßen Mischung werden in 75 Gew.-Teilen Xylol unter Zusatz von Ca-Dodecylbenzolsulfonat und Ricinusölethoxylat (jeweils 5 Gew.-Teile) gelöst. Bei der Verdünnung in Wasser ergibt sich eine Emulsion. Die Formulierung hat einen Wirkstoffgehalt von 15 Gew.-%.

D) Emulsionen (EW, EO)

25 Gew.-Teile einer erfindungsgemäßen Mischung werden in 35 Gew.-Teilen Xylol unter Zusatz von Ca-Dodecylbenzolsulfonat und Ricinusölethoxylat (jeweils 5 Gew.-Teile) gelöst. Diese Mischung wird mittels einer Emulgiermaschine (z.B. Ultraturrax) in 30 Gew.Teile Wasser gegeben und zu einer homogenen Emulsion gebracht. Bei der Verdünnung in Wasser ergibt sich eine Emulsion. Die Formulierung hat einen Wirkstoffgehalt von 25 Gew.-%.

E) Suspensionen (SC, OD)

20 Gew.-Teile einer erfindungsgemäßen Mischung werden unter Zusatz von 10 Gew.-Teilen Dispergier- und Netzmitteln und 70 Gew.-Teilen Wasser oder einem organischen Lösungsmittel in einer Rührwerkskugelmühle zu einer feinen Wirkstoffsuspension zerkleinert. Bei der Verdünnung in Wasser ergibt sich eine stabile Suspension der Wirkstoffe. Der Wirkstoffgehalt in der Formulierung beträgt 20 Gew.-%.

F) Wasserdispergierbare und wasserlösliche Granulate (WG, SG)

50 Gew.-Teile einer erfindungsgemäßen Mischung werden unter Zusatz von 50 Gew-Teilen Dispergier- und Netzmitteln fein gemahlen und mittels technischer Geräte (z.B. Extrusion, Sprühturm, Wirbelschicht) als wasserdispergierbare oder wasserlösliche Granulate hergestellt. Bei der Verdünnung in Wasser ergibt sich eine stabile Dispersion oder Lösung der Wirkstoffe. Die Formulierung hat einen Wirkstoffgehalt von 50 Gew.-%.

G) Wasserdispergierbare und wasserlösliche Pulver (WP, SP)

75 Gew.-Teile einer erfindungsgemäßen Mischung werden unter Zusatz von 25 Gew.-Teilen Dispergier- und Netzmitteln sowie Kieselsäuregel in einer Rotor-Strator Mühle vermahlen. Bei der Verdünnung in Wasser ergibt sich eine stabile Dispersion oder Lösung der Wirkstoffe. Der Wirkstoffgehalt der Formulierung beträgt 75 Gew.-%.

2. Produkte für die Direktapplikation

H) Stäube (DP)

5 Gew.-Teile einer erfindungsgemäßen Mischung werden fein gemahlen und mit 95 Gew.-Teilen feinteiligem Kaolin innig vermischt. Man erhält dadurch ein Stäubemittel mit einem Wirkstoffgehalt von 5 Gew.-%.

J) Granulate (GR, FG, GG, MG)

0,5 Gew-Teile einer erfindungsgemäßen Mischung werden fein gemahlen und mit 99,5 Gew.-Teilen Trägerstoffe verbunden. Gängige Verfahren sind dabei die Extrusion, die Sprühtrocknung oder die Wirbelschicht. Man erhält dadurch ein Granulat für die Direktapplikation mit einem Wirkstoffgehalt von 0,5 Gew.-%.

K) ULV- Lösungen (UL)

10 Gew.-Teile einer erfindungsgemäßen Mischung werden in 90 Gew.-Teilen eines organischen Lösungsmittel, z.B. Xylol, gelöst. Dadurch erhält man ein Produkt für die Direktapplikation mit einem Wirkstoffgehalt von 10 Gew.-%.

Die Wirkstoffe können als solche, in Form ihrer Formulierungen oder den daraus bereiteten Anwendungsformen, z.B. in Form von direkt versprühbaren Lösungen, Pulvern, Suspensionen oder Dispersionen, Emulsionen, Öldispersionen, Pasten, Stäubmitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der Wirkstoffe gewährleisten.

Wässrige Anwendungsformen können aus Emulsionskonzentraten, Pasten oder netzbaren Pulvern (Spritzpulver, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermitttel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Die Wirkstoffkonzentrationen in den anwendungsfertigen Zubereitungen können in größeren Bereichen variiert werden. Im allgemeinen liegen sie zwischen 0,0001 und 10%, vorzugsweise zwischen 0,01 und 1 %.

Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Zu den Wirkstoffen können Öle verschiedenen Typs, Netzmittel, Adjuvants, Herbizide, andere Schädlingsbekämpfungsmittel, Bakterizide, gewünschtenfalls auch erst unmittelbar vor der Anwendung (Tankmix), zugesetzt werden. Diese Mittel werden üblicherweise zu den erfindungsgemäßen Mischungen im Gewichtsverhältnis 1:100 bis 100:1, bevorzugt 1:10 bis 10:1, gemischt.

Als Adjuvants in diesem Sinne kommen insbesondere in Frage: organisch modifizierte Polysiloxane, z.B. Break Thru S 240®; Alkoholalkoxylate, z. B. Atplus 245®, Atplus MBA 1303®, Plurafac LF 300® und Lutensol ON 30®; EO-PO-Blockpolymerisate, z. B. Pluronic RPE 2035® und Genapol B®; Alkoholethoxylate, z. B. Lutensol XP 80®; und Natriumdioctylsulfosuccinat, z. B. Leophen RA®.

Die Komponenten 1) und 2), bzw. die Mischungen oder die entsprechenden Formulierungen werden angewendet, indem man die Schadpilze, deren Lebensraum oder die von ihnen freizuhaltenden Pflanzen, Samen, Böden, Flächen, Materialien oder Räume mit einer fungizid wirksamen Menge der Mischung, bzw. der Komponenten 1) und 2) bei getrennter Ausbringung, behandelt. Die Anwendung kann vor oder nach dem Befall durch die Schadpilze erfolgen.

Anwendungsbeispiele

Die fungizide Wirkung der Einzelverbindungen und der erfindungsgemäßen Mischungen ließ sich durch die folgenden Versuche zeigen.

Die Wirkstoffe wurden getrennt oder gemeinsam als eine Stammlösung aufbereitet mit 25 mg Wirkstoff, welcher mit einem Gemisch aus Aceton und/oder Dimethylsulfoxid und dem Emulgator Uniperol® EL (Netzmittel mit Emulgier- und Dispergierwirkung auf der Basis ethoxylierter Alkylphenole) im Volumen-Verhältnis Lösungsmittel-Emulgator von

99 zu 1 ad 10 ml aufgefüllt wurde. Anschließend wurde ad 100 ml mit Wasser aufgefüllt. Diese Stammlösung wurde mit dem beschriebenen Lösungsmittel-Emulgator-Wasser Gemisch zu der unten angegebenen Wirkstoffkonzentration verdünnt.

Alternativ dazu wurden die Wirkstoffe Epoxiconazol, Triticonazol und Pyraclostrobin als handelsübliche Fertigformulierung verwendet und mit Wasser auf die angegebenen Wirkstoffkonzentrationen verdünnt.

Die visuell ermittelten Werte für den Prozentanteil befallener Blattflächen wurden in Wirkungsgrade als % der unbehandelten Kontrolle umgerechnet.

Der Wirkungsgrad (W) wird nach der Formel von Abbot wie folgt berechnet:

$$W = (1 - \alpha / \beta) \circ 100$$

$\alpha$entspricht dem Pilzbefall der behandelten Pflanzen in % und
$\beta$entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Die zu erwartenden Wirkungsgrade der Wirkstoffkombinationen wurden nach der Colby-Formel (Colby, S. R. " Calculating synergistic and antagonistic responses of herbicide Combinations", Weeds 15, S. 20 - 22, 1967) ermittelt und mit den beobachteten Wirkungsgraden verglichen.

Colby Formel:

$$E = x + y - x \circ y / 100$$

Ezu erwartender Wirkungsgrad, ausgedrückt in % der unbehandelten Kontrolle, beim Einsatz der Mischung aus den Wirkstoffen A und B in den Konzentrationen a und b;
xder Wirkungsgrad, ausgedrückt in % der unbehandelten Kontrolle, beim Einsatz des Wirkstoffs A in der Konzentration a;
yder Wirkungsgrad, ausgedrückt in % der unbehandelten Kontrolle, beim Einsatz des Wirkstoffs B in der Konzentration b.

Anwendungsbeispiel 1 - Wirksamkeit gegen die Dürrfleckenkrankheit der Tomate verursacht durch *Alternaria solani*

Blätter von getopften Tomatenpflanzen wurden mit einer wässriger Suspension in der unten angegebenen Wirkstoffkonzentration bis zur Tropfnässe besprüht. Am folgenden Tag wurden die Blätter mit einer wässrigen Sporenaufschwemmung von *Alternaria solani* in 2 % Biomalzlösung mit einer Dichte von 0.17 x $10^6$ Sporen/ml infiziert. Anschließend wurden die Pflanzen in einer wasserdampf-gesättigten Kammer bei Temperaturen zwischen 20 und 22°C aufgestellt. Nach 5 Tagen hatte sich die Krankheit auf den unbehandelten, jedoch infizierten Kontrollpflanzen so stark entwickelt, dass der Befall visuell in % ermittelt werden konnte.

| Wirkstoff/Wirkstoffmischung | Konzentration [mg/l] | Verhältnis | Beobachtete Wirkung (% Befall) | Berechnete Wirkung nach Colby (%) |
|---|---|---|---|---|
| (Kontrolle) | --- | --- | 0 (90% Befall) | --- |
| Nr. Ia.719 | 4 | --- | 0 | --- |
| Prochloraz | 16 | --- | 30 | --- |
| Pyraclostrobin | 4 | --- | 50 | --- |
| Metiram | 63 | --- | 0 | --- |
| Chlorthalonil | 63 | --- | 0 | --- |
| Nr. Ia.719 + Prochloraz | 4+16 | 1 : 4 | 60 | 30 |
| Nr. Ia.719 + Pyraclostrobin | 4+4 | 1 : 1 | 93 | 50 |
| Nr. Ia.719 + Metiram | 4+63 | 1 : 4 | 70 | 0 |
| Nr. Ia.179 + Chlorthalonil | 4+63 | 1 : 4 | 70 | 0 |

Anwendungsbeispiel 2 - Wirksamkeit gegen den Grauschimmel an Paprikablättern verursacht durch *Botrytis cinerea* bei 1 Tag protektiver Anwendung

Paprikasämlinge der Sorte "Neusiedler Ideal Elite" wurden, nachdem sich 2 - 3 Blätter gut entwickelt hatten, mit einer wässrigen Suspension in der unten angegebenen Wirkstoffkonzentration bis zur Tropfnässe besprüht. Am nächsten Tag wurden die behandelten Pflanzen mit einer Sporensuspension von *Botrytis cinerea,* die 1,7 x $10^6$ Sporen/ml in einer 2%igen wässrigen Biomalzlösung enthielt, inokuliert. Anschließend wurden die Versuchspflanzen in eine Klimakammer mit 22 bis 24°C, Dunkelheit und hoher Luftfeuchtigkeit gestellt. Nach 5 Tagen konnte das Ausmaß des Pilzbefalls auf den Blättern visuell in % ermittelt werden.

| Wirkstoff/Wirkstoff mischung | Konzentration [mg/l] | Verhältnis | Beobachtete Wirkung (% Befall) | Berechnete Wirkung nach Colby (%) |
|---|---|---|---|---|
| (Kontrolle) | --- | --- | 0 (100% Befall) | --- |
| Nr. Id.344 | 1 | --- | 40 | --- |
| Nr. Ia.344 | 16 | --- | 60 | --- |
| Nr. Ij.344 | 4<br>1 | ---<br>--- | 22<br>0 | --- |
| Triticonazol | 4 | --- | 0 | --- |
| Prochloraz | 4 | --- | 11 | --- |
| Dimethomorph | 63<br>16<br>4 | ---<br>---<br>--- | 0<br>0<br>0 | ---<br>---<br>--- |
| Metiram | 16 | --- | 0 | --- |
| Metrafenon | 63<br>16<br>4 | ---<br>---<br>--- | 0<br>0<br>0 | ---<br>---<br>--- |
| Nr. Id.344 + Dimethomorph | 1+4 | 1 : 4 | 80 | 40 |
| Nr. Id.344 + Metiram | 1+16 | 1 : 16 | 70 | 40 |
| Nr. Id.344 + Metrafenon | 1+4 | 1 : 4 | 60 | 40 |
| Nr. Ia.344 + Dimethomorph | 16+63 | 1 : 4 | 85 | 60 |
| Nr. Ia.344 + Metrafenon | 16+63 | 1 : 4 | 90 | 60 |
| Nr. Ij.344 + Triticonazol | 4+4 | 1 : 1 | 78 | 22 |
| Nr. Ij.344 + Prochloraz | 1+4 | 1 : 4 | 92 | 11 |
| Nr. Ij.344 + Dimethomorph | 4+16 | 1 : 4 | 78 | 22 |
| Nr. Ij.344 + Metrafenon | 4+16 | 1 : 4 | 100 | 22 |

Anwendungsbeispiel 3 - Kurative Wirksamkeit gegen Weizenbraunrost verursacht durch *Puccinia recondita*

Blätter von in Töpfen gewachsenen Weizensämlingen der Sorte "Kanzler" wurden mit einer Sporensuspension des Braunrostes (*Puccinia recondita*) inokuliert. Danach wurden die Töpfe für 24 Stunden in eine Kammer mit hoher Luftfeuchtigkeit (90 bis 95 %) und 20 bis 22°C gestellt. Während dieser Zeit keimten die Sporen aus und die Keimschläuche drangen in das Blattgewebe ein. Die infizierten Pflanzen wurden am nächsten Tag mit der oben beschriebenen Wirkstofflösung in der unten angegebenen Wirkstoffkonzentration bis zur Tropfnässe besprüht. Nach dem Antrocknen des Spritzbelages wurden die Versuchspflanzen im Gewächshaus bei Temperaturen zwischen 20 und 22°C und 65 bis 70 % relativer Luftfeuchte für 7 Tage kultiviert. Dann wurde das Ausmaß der Rostpilzentwicklung auf den Blättern ermittelt.

| Wirkstoff/Wirkstoffmischung | Konzentration [mg/l] | Verhältnis | Beobachtete Wirkung (% Befall) | Berechnete Wirkung nach Colby (%) |
|---|---|---|---|---|
| (Kontrolle) | --- | --- | 0 (90% Befall) | --- |
| Nr. Id.344 | 1 | --- | 0 | --- |
| Nr. Ij.344 | 1 | --- | 0 | --- |
| Nr. Ia.719 | 0,25 | --- | 0 | --- |
| Epoxiconazol | 0,063 | --- | 0 | --- |
| Triticonazol | 1 | --- | 0 | --- |
| Pyraclostrobin | 1 | --- | 0 | --- |
| Chlorthalonil | 16 | --- | 0 | --- |
| 5-Chlor-7-(4-methyl-piperidin-1-yl)-6-(2,4,6-trifluor-phenyl)-[1,2,4]triazolo[1,5-a]pyrimidin | 4 | --- | 40 | - |
| Nr. Id.344 + Triticonazol | 1 + 1 | 1 : 1 | 56 | 0 |
| Nr. Id.344 + Pyraclostrobin | 1 + 1 | 1 : 1 | 83 | 0 |
| Nr. Id.344 + Chlorthalonil | 1+16 | 1 : 16 | 78 | 0 |
| Nr. Ij.344 + 5-Chlor-7-(4-methyl-piperidin-1-yl)-6-(2,4,6-trifluor-phenyl)-[1,2,4]triazolo[1,5-a]pyrimidin | 1+4 | 1 : 4 | 100 | 40 |
| Nr. Ia.719 + Epoxiconazol | 0,25 + 0,063 | 4 : 1 | 30 | 0 |

Anwendungsbeispiel 4 - Wirksamkeit gegen die Netzfleckenkrankheit der Gerste verursacht durch *Pyrenophora teres* bei 1 Tag protektiver Anwendung

Blätter von in Töpfen gewachsenen Gerstenkeimlingen wurden mit wässriger Suspension in der unten angegebenen Wirkstoffkonzentration bis zur Tropfnässe besprüht. 24 Stunden nach dem Antrocknen des Spritzbelages wurden die Versuchspflanzen mit einer wässrigen Sporensuspension von *Pyrenophora [syn. Drechslera] teres,* dem Erreger der Netzfleckenkrankheit inokuliert. Anschließend wurden die Versuchspflanzen im Gewächshaus bei Temperaturen zwischen 20 und 24°C und 95 bis 100 % relativer Luftfeuchtigkeit aufgestellt. Nach 6 Tagen wurde das Ausmaß der Krankheitsentwicklung visuell in % Befall der gesamten Blattfläche ermittelt.

| Wirkstoff/Wirkstoffmischung | Konzentration [mg/l] | Verhältnis | Beobachtete Wirkung (% Befall) | Berechnete Wirkung nach Colby (%) |
|---|---|---|---|---|
| (Kontrolle) | --- | --- | 0 (90% Befall) | --- |
| Nr. Id.344 | 0,25 | --- | 67 | --- |
| Epoxiconazol | 0,063 | --- | 0 | --- |
| Nr. Id.344 + Epoxiconazol | 0,25 + 0,063 | 4 : 1 | 83 | 67 |

Aus den Ergebnissen der Versuche geht hervor, dass die erfindungsgemäßen Mischungen aufgrund des Synergismus erheblich besser wirksam sind, als nach der Colby-Formel vorausberechnet.

**Patentansprüche**

**1.** Fungizide Mischungen zur Bekämpfung von pflanzenpathogenen Schadpilzen, enthaltend

1) ein 1-Methylpyrazol-4-ylcarbonsäureanilid der Formel Ia.719, Ia.344, Id.344 oder Ij.344

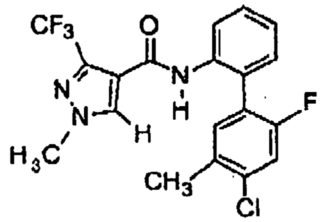

Ia.719

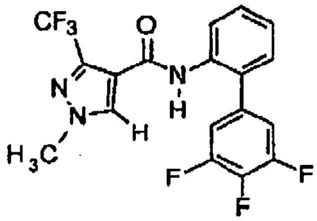

Ia.344

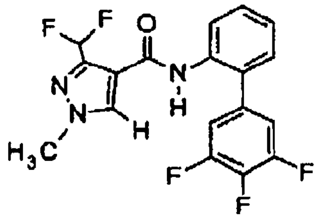

Id.344

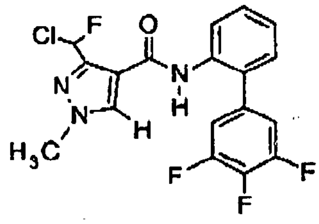

Ij.344

und

2) einen Wirkstoff II, ausgewählt aus den Gruppen A) bis F):

A) Azole, ausgewählt aus Epoxiconazol. Triticonazol und Prochloraz ;
B) Pyraclostrobin;
C) Dimethomorph;
D) 5-Chlor-7-(4-methyl-piperidin-1-yl)-6-(2,4,6-trifluor-phenyl)-[1,2,4]triazolo[1,5-a]pyrimidin;
E) Metiram;
F) Sonstige Fungizide, ausgewählt aus Chlorthalonil und Metrafenon;

in einer synergistisch wirksamen Menge.

2. Fungizide Mischungen nach den Anspruch 1, enthaltend die Komponenten 1) und 2) in einem Gewichtsverhältnis von 100:1 bis 1:100.

3. Mittel, enthaltend mindestens einen flüssigen oder festen Trägerstoff und eine Mischung gemäß Anspruch 1.

4. Verfahren zur Bekämpfung von pflanzenpathogenen Schadpilzen, **dadurch gekennzeichnet, dass** man die Pilze, deren Lebensraum oder die vor Pilzbefall zu schützenden Pflanzen, den Boden, Saatgüter, Flächen, Materialien oder Räume mit einer wirksamen Menge mindestens einer Verbindung I und mindestens einer Verbindung II gemäß Anspruch 1 behandelt.

5. Verfahren nach Anspruch 4, **dadurch gekennzeichnet, dass** man die Komponenten 1) und 2) gemäß Anspruch 1 gleichzeitig, und zwar gemeinsam oder getrennt, oder nacheinander ausbringt.

6. Verfahren nach Anspruch 4 oder 5, **dadurch gekennzeichnet, dass** man die Komponenten 1) und 2) gemäß Anspruch 1 in einer Menge von 5 g/ha bis 2000 g/ha aufwendet.

7. Verfahren nach Anspruch 4 oder 5, **dadurch gekennzeichnet, dass** man die Komponenten 1) und 2) gemäß Anspruch 1 in einer Menge von 1 g bis 1000 g pro 100 kg Saatgut anwendet.

8. Saatgut, enthaltend die Mischung gemäß Anspruch 1 in einer Menge von 1 g bis 1000 g pro 100 kg Saatgut.

9. Verwendung der Verbindungen I und II gemäß Anspruch 1 zur Herstellung eines zur Bekämpfung von Schadpilzen geeigneten Mittels.

## Claims

1. A fungicidal mixture for controlling phytopathogenic harmful fungi, which mixture comprises

1) a 1-methylpyrazol-4-ylcarboxanilide of the formula Ia.719, Ia.344, Id.344 or Ij.344

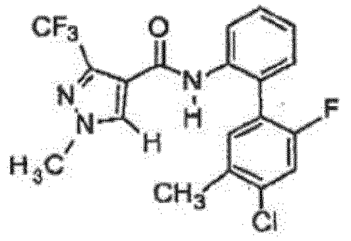

Ia.719

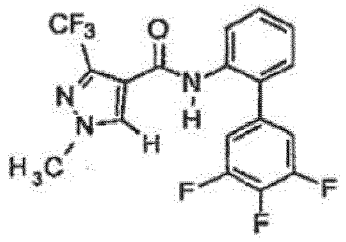

Ia.344

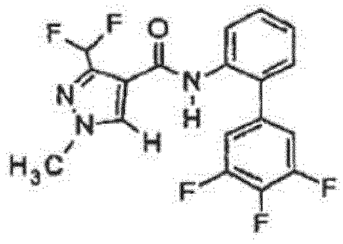

Id.344

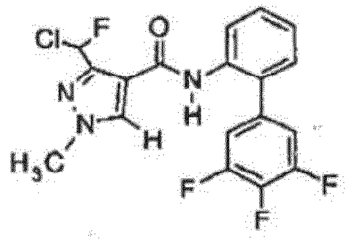

Ij.344

and

2) an active compound II, selected from the groups A) to F):

A) azoles selected from the group consisting of epoxiconazole, triticonazole and prochloraz;
B) pyraclostrobin;
C) dimethomorph;
D) 5-chloro-7-(4-methylpiperidin-1-yl)-6-(2,4,6-trifluorophenyl)-[1,2,4]triazolo[1,5-a]pyrimidine;
E) metiram;
F) other fungicides selected from the group consisting of chlorothalonil and metrafenone;

in a synergistically effective amount.

2. The fungicidal mixture according to claim 1, comprising the components 1) and 2) in a weight ratio of from 100:1 to 1:100.

3. A composition, comprising at least one liquid or solid carrier and a mixture according to claim 1.

4. A method for controlling phytopathogenic harmful fungi, wherein the fungi, their habitat or the plants, the soil, seeds, areas, materials or spaces to be protected against fungal attack are/is treated with an effective amount of at least one compound I and at least one compound II according to claim 1.

5. The method according to claim 4, wherein the components 1) and 2) according to claim 1 are applied simultaneously, that is jointly or separately, or in succession.

6. The method according to claim 4 or 5, wherein the components 1) and 2) according to claim 1 are applied in an amount of from 5 g/ha to 2000 g/ha.

7. The method according to claim 4 or 5, wherein the components 1) and 2) according to claim 1 are applied in an amount of from 1 g to 1000 g per 100 kg of seed.

8. Seed, comprising the mixture according to claim 1 in an amount of from 1 g to 1000 g per 100 kg of seed.

9. The use of the compounds I and II according to claim 1 for preparing a composition suitable for controlling harmful fungi.

## Revendications

1. Mélanges fongicides pour la maîtrise de champignons phytopathogènes, contenant :

1) un 1-méthylpyrazole-4-ylcarboxanilide de formule Ia.719, Ia.344, Id.344

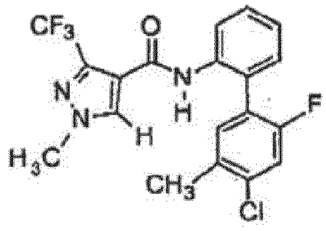

Ia.719

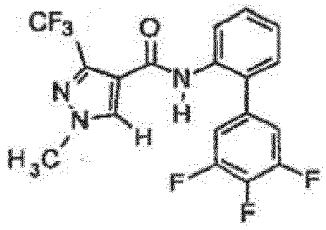

Ia.344

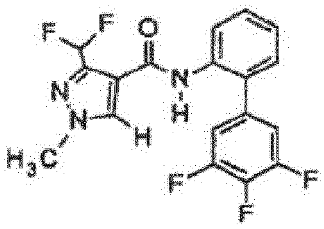

Id.344

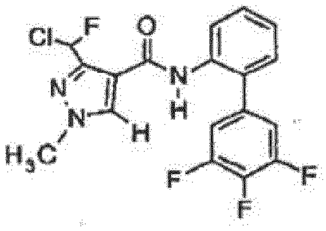

Ij.344

2) une matière active II choisie dans les groupes de matières actives A) à F) :

A) les azoles choisis parmi l'époxiconazole, le triticonazole et le prochloroaz ;
B) la pyraclostrobine ;
C) le diméthomorph ;
D) la 5-chloro-7-(4-méthyl-pipéridin-1-yl)-6-(2,4,6-trifluoro-phényl)-[1,2,4]triazolo[1,5-a]pyrimidine ;
E) le métiram ;
F) d'autres fongicides choisis parmi le chlorothalonil et le métrafénon ;

en une quantité à effet synergique.

**2.** Mélanges fongicides selon la revendication 1, contenant les composants 1) et 2) selon un rapport en poids de 100:1 à 1:100.

**3.** Produits contenant au moins un support liquide ou solide et un mélange selon la revendication 1.

**4.** Procédé pour la maîtrise de champignons phytopathogènes, **caractérisé en ce qu'**on traite les champignons, leur habitus et les plantes devant être protégées de l'infestation fongique, le sol, les semences, les surfaces, les matériaux ou les locaux, avec une quantité efficace d'au moins un composé I et d'au moins un composé II selon la revendication 1.

5. Procédé selon la revendication 4, **caractérisé en ce qu'**on applique les composants 1) et 2) selon la revendication 1 simultanément, et plus précisément ensemble ou séparément, ou successivement.

6. Procédé selon la revendication 4 ou 5, **caractérisé en ce qu'**on utilise les composants 1) et 2) selon la revendication 1 en une quantité de 5 à 2000 g/ha.

7. Procédé selon la revendication 4 ou 5, **caractérisé en ce qu'**on utilise les composants 1) et 2) selon la revendication 1 en une quantité de 1 à 1000 g/100 kg de semence.

8. Semence, contenant le mélange selon la revendication 1 en une quantité de 1 g à 1000 g par 100 kg de semence.

9. Utilisation des composés I et II selon la revendication 1 pour préparer un produit convenant à la maîtrise des champignons pathogènes.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 545099 A
- EP 589301 A
- WO 9909013 A
- EP 196038 A
- US 3991071 A
- FR 2641277
- US 3248400 A
- WO 9846607 A
- US 3290353 A
- US 5945567 A
- EP 120321 A
- WO 9601256 A
- WO 2005034628 A
- WO 2006087343 A


### In der Beschreibung aufgeführte Nicht-Patentliteratur


- **COLBY, S. R.** Calculating synergistic and antagonistic responses of herbicide Combinations. *Weeds,* 1967, vol. 15, 20-22